# EUROPÄISCHE PATENTSCHRIFT

(11) **EP 1 155 889 B1**
(45) Veröffentlichungstag und Bekanntmachung des Hinweises auf die Patenterteilung: **21.07.2004**
(21) Anmeldenummer: 01110742.2
(22) Anmeldetag: 03.05.2001
(51) Int. Cl.: B60H 1/34, B60H 1/00, F24F 13/15

(54) **Steuereinrichtung für einen in einem Kanal geführten Gasstrom**
Control device for a flow of gas in a channel
Dispositif de commande pour un écoulement gazeux dans une conduite

(30) Priorität: 18.05.2000 DE 10024693
(43) Veröffentlichungstag der Anmeldung: 21.11.2001
(73) Patentinhaber: Behr GmbH & Co., 70469 Stuttgart (DE); Sonceboz S.A., 2605 Sonceboz (CH)
(72) Erfinder: Reinisch, Eric, Dipl.-Ing., 69469 Weinheim (DE); Dietz, Daniel, 2605 Sonceboz-Sombeval (CH)
(74) Vertreter: Patentanwälte Ruff, Wilhelm, Beier, Dauster & Partner

(56) Entgegenhaltungen:
- DE-A- 4 442 000
- US-A- 4 275 762
- PATENT ABSTRACTS OF JAPAN vol. 1999, no. 04, 30. April 1999 (1999-04-30) & JP 11 018403 A (SANDEN CORP), 22. Januar 1999 (1999-01-22)

## Beschreibung

Die Erfindung betrifft eine Steuereinrichtung für die Steuerung von Luftströmen in Kraftfahrzeugklimaanlagen, mit einem in den Kanal einbaubaren Rahmen und mit in diesem mit ihren Enden schwenkbar gelagerten Lamellen, deren Abmessungen so gewählt sind, dass sie in einer Schließstellung den Durchtrittsquerschnitt des Rahmens abdecken, wobei mindestens eine der Lamellen über ein an einer Außenseite des Rahmens liegendes Stirnrad angetrieben ist und alle Lamellen gleichsinnig verstellbar sind.

Eine Steuereinrichtung dieser Art ist aus der DE 44 42 000 A1 bekannt. Sollen die Lamellen dabei nicht von Hand, sondern über einen Antrieb bewegt werden, so ist es bei Verwendung eines Elektromotors als Antrieb notwendig, ein Untersetzungsgetriebe vorzusehen, das die relativ hohe Drehzahl des Elektromotors in die notwendige langsame Schwenkbewegung der Lamellen umsetzt. So ist beispielsweise bei Motordrehzahlen von 700 oder 1500 U/min eine Untersetzung auf etwa 2 U/min notwendig. Dies führt zu Getriebeanordnungen sperriger Art, die viel Platz beanspruchen, der aber insbesondere in Kraftfahrzeugen nicht zur Verfügung steht.

Dazu kommt, dass der Anbau solcher Getriebe und der weitere Anbau eines Motors an diesem Getriebe aufwendig und umständlich ist.

Bei Stellantrieben anderer Art (DE 27 00 928 A1), die zur Steuerung der Luftklappen in Heizungs- und Klimaanlagen von Gebäuden vorgesehen wird, ist es auch bekannt, ein Untersetzungsgetriebe mit einem Elektromotor zu einer von Platinen gebildeten Antriebseinheit zusammenzufassen, die über eine dem letzten Antriebszahnrad zugeordnete Hohlwelle auf die anzutreibende Achse einer der Luftklappen aufgeschoben, von dieser getragen und nur noch gegen Verdrehen gesichert wird. Die Dimensionierung des Getriebes spielt dort keine entscheidende Rolle, weil die beengten räumlichen Verhältnisse der eingangs genannten Stellantriebe dort nicht vorliegen. Auch solche Antriebseinheiten müssen nachträglich an den Luftklappen angebracht werden, was bei Steuereinrichtungen für die Steuerung von Luftströmen in Kraftfahrzeugklimaanlagen nicht ohne weiteres möglich ist.

Aus Patent Abstracts of Japan Band 1999 Nr. 4 vom 30. April 1999 und aus der dort beschriebenen JP 11018403 A ist ein Antriebsaggregat mit einem Antriebsmotor bekannt, dessen Ritzel von außen in ein Gehäuse eingeführt wird, indem sich ein Getriebe befindet. Dort geht es darum, die vor jedem Antriebssignal vorhandene Ausgangsstellung der Abtriebswelle des Getriebes feststellen zu können, was dort mit Anschlägen erreicht wird, die zum einen dem der Abtriebswelle zugeordneten Zahnrad und zum anderen der Getriebeschale zugeordnet sind, in der dieses der Abtriebswelle zugeordnete Zahnrad geführt ist. Die Zahnräder des Untersetzungsgetriebes selbst sind auf Lagerbolzen räumlich nebeneinander im Gehäuse angeordnet.

Der vorliegenden Erfindung liegt die Aufgabe zugrunde, bei Stellantrieben der eingangs genannten Art eine einfachere Montageart vorzuschlagen, die auch den Vorteil einer kompakten und wenig Platz beanspruchenden Bauart hat.

Zur Lösung dieser Aufgabe werden bei einer Steuereinrichtung der eingangs genannten Art die kennzeichnenden Merkmale des Patentanspruchs 1 vorgeschlagen.

Diese Ausgestaltung bringt eine wesentliche Montagevereinfachung mit sich, weil das gesamte Untersetzungsgetriebe einschließlich Antriebsmotor als Baueinheit schon am Einbaurahmen integriert sein kann, wenn dieser eingesetzt wird.

Das Untersetzungsgetriebe besteht dabei aus mehreren übereinander angeordneten Stirnrädern, deren Achsen in einer Ebene angeordnet sind, die parallel zu der Ebene verläuft oder mit dieser zusammenfällt, in der auch die Lagerstellen der Lamellen verlaufen. Diese Ausgestaltung nämlich führt zu einem sich zwar in einer Richtung relativ lang erstreckenden, aber in der Breite sehr schmalen Getriebe. Insbesondere dann, wenn nach der Erfindung der größte Durchmesser der Stirnräder kleiner als die Rahmenbreite ist, führt diese Ausgestaltung zu einem Antrieb, der als Ganzes seitlich an einer der Seitenwände des Rahmens angebracht sein kann. Dieser ganze Antrieb lässt sich bei dieser Bauart in einem Anbaugehäuse unterbringen, das in seiner Breite der Breite des Rahmens entspricht und das beispielsweise in einfacher Weise am Rahmen anklipsbar ist.

In Weiterbildung der Erfindung kann als Elektromotor ein Schrittschaltmotor vorgesehen werden, der eine sehr feinfühlige Einstellung der Lage der Lamellen und damit auch eine feinfühlige Einstellung der durch die Steuereinrichtung strömenden Gas oder Luftmenge erlaubt.

Der Erfindung ist in der Zeichnung anhand eines Ausführungsbeispieles dargestellt und wird im folgenden erläutert. Es zeigen:
Fig. 1 eine perspektivische Ansicht einer Ausführungsform einer Steuereinrichtung zum Einbau in eine Klimaanlage eines Kraftfahrzeuges,
Fig. 2 eine Ansicht ähnlich Fig. 1, jedoch schematisch und mit abgenommenen Verkleidungsteilen, um den Aufbau der Anbaueinheit für den Antrieb zu zeigen und
Fig. 3 eine schematische Darstellung einer Stirnansicht auf die den Antrieb bildende Anbaueinheit mit abgenommener Außenverkleidung in Richtung der Schnittebene III-III nach Fig. 2 gesehen.

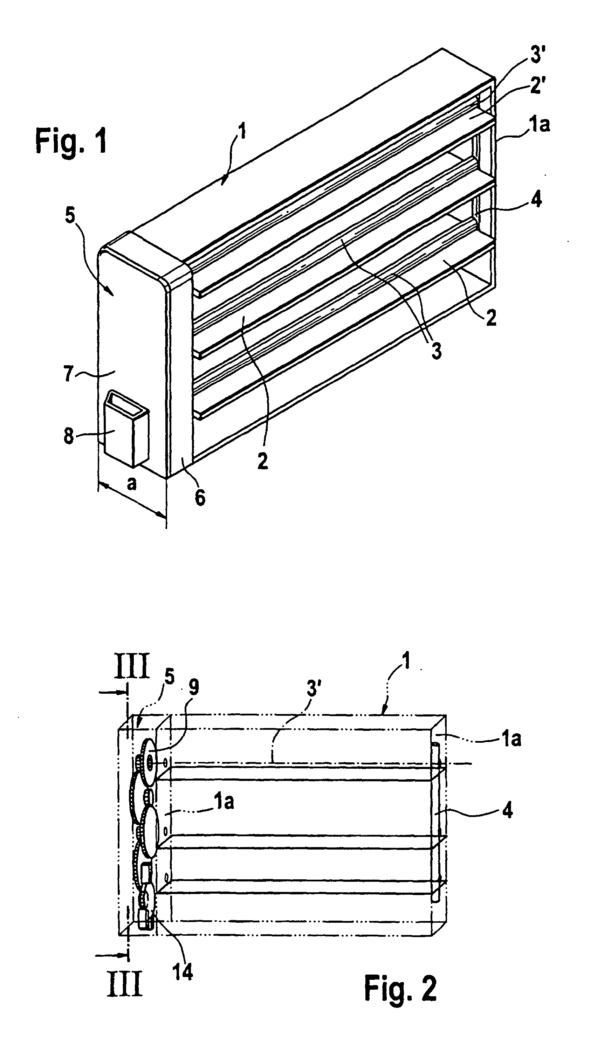

Die Fig. 1 läßt zunächst erkennen, dass die für den Einbau in einen Strömungskanal einer Klimaanlage eines Kraftfahrzeuges gedachte Steuereinrichtung aus einem Rahmen 1 besteht, in dessen Seitenwänden 1a klappenartige Lamellen 2 jeweils um etwa 90° schwenkbar gelagert sind. Die Lamellen, von denen im Ausführungsbeispiel nur drei gezeigt sind, sind dabei in ihrer Längsmitte jeweils mit einer Schwenkachse 3 versehen, die stirnseitig über die Lamellen hinaus steht und in nicht näher gezeigten Lagern in den Seitenwänden 1a gehalten sind. Alle Lamellen 2 stehen auf einer Seite ihrer Schwenkachsen mit einer gemeinsamen Koppeleinrichtung in Form einer Koppelstange 4 in Verbindung, die dazu führt, dass sich alle Lamellen 2 beim Antrieb einer Lamelle gleichsinnig verstellen. Die Lamellen sind ferner so ausgelegt, dass sie in einer Schließstellung den Durchtrittsquerschnitt des Rahmens 1 verschließen.

Der Antrieb für die Lamellen 2 ist in einem Anbaugehäuse 5 untergebracht, das aus einem schalenförmigen Gehäuseteil 6 und aus einem auf diesen aufgesetzten Deckelteil 7 besteht. Der Deckelteil 7 ist außen mit einer integrierten Steckbuchse 8 zur Aufnahme eines für die Energieversorgung des Antriebes dienenden, nicht gezeigten Steckers versehen. Dieses aus dem Gehäuseteil 6 und dem Deckel 7 bestehende Anbaugehäuse 5 ist fest an eine der Stirnseiten 1a des Rahmens 1 angesetzt, beispielsweise über eine bekannte und daher auch nicht näher gezeigte Rastverbindung angeklipst. Das Anbaugehäuse 5 bildet daher eine Baueinheit mit dem Rahmen 1, die seitlich nur wenig über die Rahmenaußenseite vorsteht.

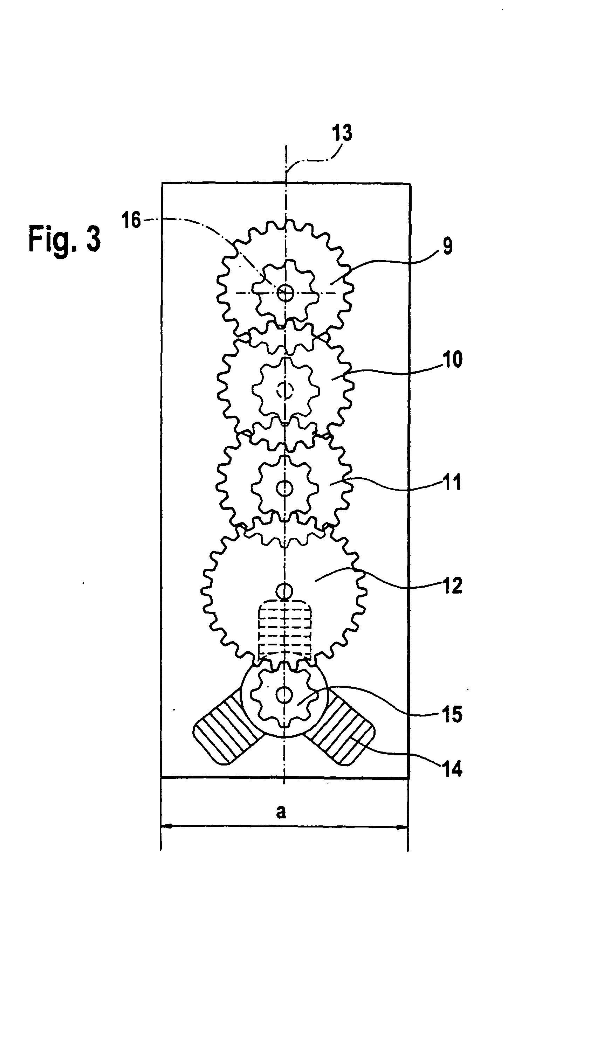

Die Fig. 2 und 3 machen deutlich, dass das innerhalb des Anbaugehäuses 5 angeordnete Untersetzungsgetriebe durch seine Anordnung zwar relativ hoch, aber sehr schmal gebaut, so dass seine Unterbringung in dem relativ flachen Anbaugehäuse 5 möglich ist.

Wie die Fig. 2 und 3 zeigen, sind zu diesem Zweck mehrere Stirnräder 9, 10, 11 und 12 übereinander so angeordnet, dass ihre Achsen in einer gemeinsamen Ebene 13 liegen, die beim gewählten Ausführungsbeispiel auch mit der Ebene zusammenfällt, in der die Schwenkachsen 3 der Lamellen 2 angeordnet sind. Ein Antriebsmotor 14 in der Form eines Schrittschaltmotors ist am unteren Ende dieser Stirnradanordnung vorgesehen und greift mit seinem Ritzel 15 in die Außenverzahnung des Stirnrades 12 ein. Dieses wiederum steht mit Ritzeln des Stirnrades 11 in Eingriff usw. Das letzte Stirnrad 9 wird daher vom Motor 14 aus mit einer bestimmten untersetzten Drehzahl angetrieben. Dieses Stirnrad 9 steht mit seiner Achse 16 mit der Schwenkachse 3' der obersten Lamelle 2' in Verbindung. Der Antriebsmotor 14 befindet sich daher auf der Seite des Getriebes, die von der angetriebenen Lamelle 2' am weitesten entfernt ist. Diese Anordnung erlaubt den Aufbau eines Untersetzungsgetriebes, das sich zwar über die Höhe der Seitenwand des Rahmens 1 erstreckt, in seinen Abmessungen aber die Außenmaße der Seitenwände 1a nicht überschreitet. Zu diesem Zweck ist der größte Durchmesser der einzelnen Stirnräder 9 bis 12 jeweils so gewählt, dass er kleiner als die Breite a der Seitenwand 1a des Rahmens 1 ist. Das Gehäuse 5 passt sich in seinen Abmessungen daher diesen Abmessungen der Seitenwand 1a an.

Durch die Erfindung kann daher eine kompakte Anbaueinheit geschaffen werden, die sich dem Einbaurahmen 1 der Steuereinrichtung anpassen lässt und wenig zusätzlichen Platz beansprucht.

## Patentansprüche

1. Steuereinrichtung für die Steuerung von Luftströmen in Kraftfahrzeugklimaanlagen, mit einem in den Kanal einbaubaren Rahmen (1) und mit in diesem mit ihren Enden schwenkbar gelagerten Lamellen (2), deren Abmessungen so gewählt sind, dass sie in einer Schließstellung den Durchtrittsquerschnitt des Rahmens abdecken, wobei mindestens eine der Lamellen (2') über ein an einer Außenseite des Rahmens liegendes Stirnrad (9) angetrieben ist und alle Lamellen gleichsinnig verstellbar sind, **dadurch gekennzeichnet, dass** das Stirnrad (9) Teil eines Untersetzungsgetriebes ist, das aus mehreren übereinander angeordneten Stirnrädern (9 bis 12) besteht, deren größter Durchmesser kleiner als die Breite (a) des Rahmens (1) ist, und das mit einem Elektromotor (14) zusammen in einem seitlich am Rahmen (1) anbringbaren und mit diesem eine kompakte Baueinheit bildenden Anbaugehäuse (5) zusammengefasst ist, wobei die Acnsen der Stirnräder (9 bis 12) in einer Ebene (13) angeordnet sind, die parallel zu der Ebene liegt oder mit dieser zusammenfallt, in der die Lagerstellen der Lamellen (2) verlaufen.

2. Steuereinrichtung nach Anspruch 1, **dadurch gekennzeichnet, dass** der Elektromotor (14) an dem von der angetriebenen Lamelle (2') abgewandten Ende der Anbaueinheit (5) angeordnet ist.

3. Steuereinrichtung nach Anspruch 1, **dadurch gekennzeichnet, dass** das Anbaugehäuse (5) in seiner Breite der Breite (a) des Rahmens entspricht.

4. Steuereinrichtung nach Anspruch 3, **dadurch gekennzeichnet, dass** die Anbaueinheit bzw. das Anbaugehäuse (5) seitlich am Rahmen (1) anklipsbar ausgebildet ist.

5. Steuereinrichtung nach Anspruch 1, **dadurch gekennzeichnet, dass** der Elektromotor ein Schrittschaltmotor ist.

## Claims

1. A control device for controlling airflows in motor-vehicle air-conditioning systems having a frame (1) that may be incorporated into the flow channel and blinds (2) whose ends are mounted on the frame such that they may be pivoted and whose dimensions are chosen such that they fully cover the transmitting area of the frame when in a closed position, where at least one of the blinds (2') is driven by a spur gear (9) situated on an outer face of the frame and all blinds may be adjusted in unison, **characterized in that** the spur gear (9) is part of a reduction gear drive that consists of several spur gears (9 - 12) arranged one above the other, where the diameter of that spur gear having the largest diameter is less than the width (a) of the frame (1), and the reduction gear drive, together with an electric motor (14), are combined in a surface-mounting housing (5) that may be attached to one side of the frame (1), forming a compact structural unit therewith, where the axes of the spur gears (9 - 12) are arranged in a plane (13) parallel to, or coinciding with, the plane of the bearing journals of the blinds (2).

2. A control device according to claim 1, **characterized in that** the electric motor (14) is arranged on that end of the surface-mounting unit (5) opposite that end thereof where the driven blind (2') is situated.

3. A control device according to claim 1, **characterized in that** the width of the surface-mounting housing (5) equals the width (a) of the frame.

4. A control device according to claim 3, **characterized in that** the surface-mounting unit, or surface-mounting housing (5), is configured such that it may be clipped onto one side of the frame (1).

5. A control device according to claim 1, **characterized in that** the electric motor is a stepper motor.

## Revendications

1. Dispositif de commande pour la distribution de courants d'air dans un système de conditionnement d'air pour véhicule automobile, comportant un cadre (1) encastrable dans le canal et, logées dans celui-là, les extrémités des lamelles (2) pivotantes dont les dimensions ont été conçues pour couvrir en position fermée le profil transversal de passage du cadre, l'une au moins des lamelles (2') étant actionnée au moyen d'une roue cylindrique droite (9) placée à une extrémité extérieure du cadre et toutes les lamelles étant orientables dans le même sens, **caractérisé par le fait que** la roue cylindrique droite (9) fait partie d'un démultiplicateur composé de plusieurs roues cylindriques droites (9 à 12), disposées l'une au-dessus de l'autre et dont le diamètre maximal est inférieur à la largeur (a) du cadre (1), et regroupé avec un moteur électrique (14) dans un boîtier rapporté (5) pouvant être posé sur le côté du cadre (1) et formant avec ce dernier une unité modulaire, les axes des roues cylindriques droites (9 à 12) étant disposés sur un plan (13) parallèle ou coïncidant avec le plan sur lequel sont alignés les points d'appui des lamelles (2).

2. Dispositif de commande conforme à la revendication 1, **caractérisé par le fait que** le moteur électrique (14) est placé à l'extrémité du boîtier rapporté (5) opposée à la lamelle (2') entraînée.

3. Dispositif de commande conforme à la revendication 1, **caractérisé par le fait que** la largeur du boîtier rapporté (5) correspond à la largeur (a) du cadre.

4. Dispositif de commande conforme à la revendication 3, **caractérisé par le fait que** l'unité ou le boîtier rapporté (5) est formé pour être fixé par clips sur le côté du cadre (1).

5. Dispositif de commande conforme à la revendication 1, **caractérisé par le fait que** le moteur électrique est un moteur pas à pas.
